Europäisches Patentamt

European Patent Office

Office européen des brevets

(19)

(11) Veröffentlichungsnummer: **0 144 541**
**B1**

(12) **EUROPÄISCHE PATENTSCHRIFT**

(45) Veröffentlichungstag der Patentschrift:
**18.01.89**

(51) Int. Cl.⁴: **B 29 C 59/04**, B 29 C 69/02

(21) Anmeldenummer: **84110052.2**

(22) Anmeldetag: **23.08.84**

(54) **Verfahren zur Herstellung einer Prägewalze zum kontinuierlichen Prägen der Oberfläche einer thermoplastischen Folie mit einer Narbung.**

(30) Priorität: **14.09.83 DE 3333179**
**20.02.84 DE 3405985**

(43) Veröffentlichungstag der Anmeldung:
**19.06.85 Patentblatt 85/25**

(45) Bekanntmachung des Hinweises auf die Patenterteilung:
**18.01.89 Patentblatt 89/3**

(84) Benannte Vertragsstaaten:
**BE FR GB IT LU NL SE**

(56) Entgegenhaltungen:
**AT-B- 228 476**
**AT-B- 248 102**
**DE-B- 1 156 969**
**DE-B- 1 162 065**
**DE-B- 1 905 198**
**DE-C- 917 503**
**US-A- 3 190 947**

(73) Patentinhaber: **J. H. Benecke AG, Beneckeallee 40,**
**D-3000 Hannover 1 (DE)**

(72) Erfinder: **Böttcher, Hugo, Freihorstfeld 40,**
**D-3000 Hannover 71 (DE)**
Erfinder: **Helmrich, Klaus, Am kahlen Berg 15,**
**D-3008 Garbsen 6 (DE)**
Erfinder: **Hildebrandt, Gustav,**
**Wilhelm-Busch-Strasse 14, D-3262 Auetal (DE)**
Erfinder: **Kracke, Heinrich, Dr., Backhausstrasse 15,**
**D-3160 Lehrte (DE)**
Erfinder: **Richter, Johannes, Wittinger Strasse 53,**
**D-3100 Celle (DE)**

(74) Vertreter: **Leine, Sigurd, Dipl.-Ing. et al, LEINE & KÖNIG**
**Patentanwälte Burckhardtstrasse 1,**
**D-3000 Hannover 1 (DE)**

## Beschreibung

Die Erfindung betrifft ein Verfahren zur Herstellung einer Prägewalze der im Anspruch 1 genannten Art.

Eine bekannte Vorrichtung der betreffenden Art weist eine Prägewalze auf, deren Prägeoberfläche auf künstliche Weise, z.B. durch mechanische Bearbeitung, mit einer Prägeform versehen ist. Dabei stellt es keine Schwierigkeit dar, die Prägeform stossfrei herzustellen. Die damit geprägte thermoplastische Folie wirkt jedoch entsprechend künstlich.

Durch die DE-OS 25 52 547 ist ein gattungsgemässes Verfahren zur Herstellung einer Matrize zur Bildung von Tiefenstrukturen in der Oberflächenschicht von Körpern bekannt. Die Matrize weist einen Metallkörper auf, auf den eine aushärtbare Kunstharzmasse aufgetragen wird, auf die eine Originalvorlage gelegt wird. Anschliessend wird die Matrize mit der aufgelagerten Originalvorlage heiss verpresst. Die Matrize kann dabei auch die Form eines Pressblechs haben, das biegsam ist und auf eine glatte Walze eines Prägekalanders aufgespannt wird. Bei diesem Aufspannen entsteht eine Stosskante, so dass zwar mit dem Prägekalander kontinuierlich geprägt werden kann, die Prägung jedoch aufgrund der Stosskante eine Diskontinuität aufweist.

Durch die DE-OS 21 41 613 ist eine Prägewalze bekannt, die auf ihrer Umfangsfläche eine Schicht aus Silikonkunstharz aufweist, in der sich reliefartige Prägestrukturen befinden. Diese Prägestrukturen werden auf künstliche Weise erzeugt. Dabei stellt es keine Schwierigkeit dar, diese Prägestrukturen stossfrei herzustellen. Eine damit hergestellte Prägung beispielsweise in einer thermoplastischen Folie wirkt jedoch entsprechend künstlich.

Aufgabe der Erfindung ist es, ein Verfahren anzugeben, nach dem sich eine Prägewalze für eine Vorrichtung zum kontinuierlichen Prägen der Oberfläche einer thermoplastischen Folie in einfacher Weise herstellen lässt, die eine natürliche Ledernarbung aufweist, ohne dass Diskontinuitäten der natürlichen Prägestruktur entstehen.

Die der Erfindung zugrundeliegende Aufgabe wird durch die im Kennzeichen des Anspruchs 1 angegebene Lehre gelöst.

Diese Lehre löst insbesondere das schwierige Problem, das bei der Verwendung einer natürlichen Lederoberfläche als Ausgangsform dadurch entsteht, dass diese Lederoberfläche nicht in einer kontinuierlichen Form vorliegt. Somit lässt sich grundsätzlich nur eine hier durchgehend als Prägemutter bezeichnete Prägeschicht z.B. in Form eines langgestreckten Rechtecks herstellen. Wird dies zu einem Schlauch gebogen, so entsteht an den gegeneinanderstossenden Rändern eine Diskontinuität, die so augenfällig ist, dass eine kontinuierliche Prägung einer thermoplastischen Folie allein mit einer solchen schlauchförmig gebogenen Prägemutter nicht möglich ist.

Das Wesentliche der Erfindung besteht darin, dieses Problem der Diskontinuität zu überwinden, um dadurch eine kontinuierliche Prägung einer thermoplastischen Folie in grossen Mengen zu ermöglichen. Hierzu sieht die Erfindung vor, von der diskontinuierlichen Prägemutter zunächst durch Prägung einer thermoplastischen Folie eine positive Zwischenform zu schaffen, die zwar ebenfalls in ihrer Oberflächenstruktur diskontinuierlich ist, die aber die vorteilhafte Eigenschaft hat, durch thermoplastische Prägung verformt werden zu können. Erfindungsgemäss wird nun der Bereich der Positivform, in dem die Diskontinuität deutlich wird, durch die Negativform der Prägemutter überprägt, so dass dadurch die Diskontinuität verlorengeht. Da bei der Prägung die thermoplastische Folie im Bereich der gegeneinanderstossenden Kanten auch die zu einer Verschweissung erforderliche Temperatur beim Überprägen erreicht, werden gleichzeitig die Stosskanten miteinander verschweisst.

Da die Überprägung in Umfangsrichtung begrenzt ist, entsteht ein Übergangsbereich, in dem die überprägte Struktur in die ursprünglich mit der Prägemutter geprägte Struktur übergeht. Dieser Übergang ist jedoch so stetig, dass er in der Praxis praktisch nicht mehr sichtbar ist.

Das Prägen der thermoplastischen Folie mit der Prägemutter kann in einfacher Weise in einer Flachpresse erfolgen, obwohl grundsätzlich auch das Prägen in einer Walzenpresse nicht ausgeschlossen ist. Auch das Überprägen der thermoplastischen Folie mit der Prägemutter kann in einer Flachpresse erfolgen, die jedoch schmal ist, derart, dass die Überprägung nur in dem Stossbereich erfolgt. Der Pressspalt erweitert sich dabei zweckmässigerweise in Umfangsrichtung des Schlauches zu den Rändern der Pressplatten hin, um so einen möglichst langen stetigen Übergang von der Überprägung zu der ursprünglichen Prägung zu erreichen.

Zur Herstellung der Prägetochter ist es zweckmässig, dass der Schlauch mit der Positivform nach aussen auf eine Walze aufgebracht, die Walze ständig gedreht und dabei mittels einer Rakel die Schicht von Siliconkautschuk aufgestrichen und anschliessend zu der Prägetochter vulkanisiert wird. Die Dicke der Prägetochter ist dadurch besonders gleichmässig, und das Auftragen mit der Rakel sorgt für ein gutes Eindringen des Siliconkautschuks in die Poren der Positivform.

Um den Übergang zwischen der Prägung und der Überprägung durch die Prägemutter auch bei schwierigen Prägestrukturen nicht in Erscheinung treten zu lassen, ist es zweckmässig, dass die Ränder der Pressplatten der für die Überprägung verwendeten Flachpresse in Achsrichtung des Schlauches schlangenförmig gekrümmt, vorzugsweise unregelmässig gekrümmt sind.

Statt einer natürlichen Lederoberfläche kann natürlich auch jede andere Art einer Oberflächenstruktur als Grundlage dienen, beispielsweise ein Gewebe, Vlies, eine Holzoberfläche oder dergleichen.

**Beispiel**

Zur Herstellung einer Prägewalze zum kontinuierlichen Prägen von thermoplastischer Folie wird zunächst eine Vorlage aus natürlichem Leder, Textil oder dergleichen auf eine ebene Unterlage gespannt und an den Kanten befestigt. Um die Kanten wird eine rahmenförmige Begrenzung gebracht und so eine Giessform gebildet, in die ein dehäsiv wirkender Siliconkautschuk gegossen wird. Dieser fügt sich der Oberflächenfeinkontur der Vorlage in jedem kleinsten Detail genau an, dringt also auch in Poren und umschliesst sogar Haare. Danach wird der Siliconkautschuk vulkanisiert, geliert oder verfestigt und von der Vorlage abgezogen. Dieser Vorgang wird mehrmals wiederholt, um so mehrere Prägemütter zu erzeugen. Sie haben jeweils eine Dicke von 3–4 mm und werden rückseitig durch Klebestreifen miteinander verbunden.

Das so hergestellte Gebilde aus mehreren Prägemüttern wird zusammen mit einer thermoplastischen Folie mit einer Stärke von etwa 0,8 mm in eine Plattenpresse gebracht, wobei die thermoplastische Folie unten liegt und die Prägefolie mit der Prägeseite nach unten darüber.

Die thermoplastische Folie wird nun von unten direkt und zusätzlich auch von oben durch die Prägemütter hindurch auf ca. 190 °C erwärmt und dadurch plastifiziert. Durch gleichzeitig aufgebrachten Druck ergibt sich nach einer gewissen Zeit der genaue Abdruck der Struktur der Prägemutter auf der thermoplastischen Folie, die z.B. aus Polyvinylchlorid besteht. Danach wird gekühlt und die geprägte thermoplastische Folie herausgenommen.

Die thermoplastische Folie wird entsprechend der Länge und dem Umfang einer Prägewalze auf Mass geschnitten und zu einem Schlauch gebogen, wobei die geprägte der Narbseite aussen liegt. Die Stossstelle wird dabei sorgfältig angepasst und rückseitig mit Klebeband verbunden. Danach wird der Schlauch nur mit der Stossstelle in eine schmale Flachpresse gebracht, in der über die Stossstelle die Prägemutter gelegt wird. Danach erfolgt wiederum eine Erwärmung und Druckbeaufschlagung, so dass die gewünschte Überprägung im Bereich der Stossstelle erfolgt. Dabei erfolgt gleichzeitig eine Verschweissung der gegeneinanderstossenden Ränder.

Der so erzeugte, auf seiner Aussenseite eine Positivform der Prägestruktur aufweisende Schlauch wird auf eine Walze gezogen und diese in ein Gestell mit Lagern gelegt und ständig rotiert. Danach wird mittels einer Rakel Siliconkautschuk in gleichmässiger Schichtdicke aufgebracht, der anschliessend zur Vulkanisation gebracht wird. Während dieser Vorgänge bleibt die Rotation der Walze erhalten, um so Ungleichmässigkeiten in der Schichtdicke zu vermeiden.

Nach der Vulkanisation wird der so erzeugte Siliconschlauch abgezogen und umgekrempelt, so dass nun das von der Vorlage abgenommene Dessin, Leder, Textil oder dergleichen als Negativform auf der Aussenfläche vorhanden ist. Der Schlauch wird über eine Walze gezogen, nachdem deren Oberfläche vorher mit einem Haftvermittler und einem Siliconklebstoff beschichtet worden ist. Nach Aushärtung der Klebeschicht kann die Walze als Prägewalze in einer Vorrichtung zur kontinuierlichen Prägung einer thermoplastischen Folie verwendet werden.

**Patentansprüche**

1. Verfahren zur Herstellung einer Prägewalze zum kontinuierlichen Prägen der Oberfläche einer thermoplastischen Folie, wobei die Prägefläche eine Negativform einer zu prägenden Narbung darstellt, bei dem auf die Oberfläche einer Narbungsvorlage ein Kunstharz als gleichmässig dikke Schicht aufgegossen oder aufgestrichen und danach zu einer Prägemutter ausgehärtet bzw. vernetzt wird, die Prägemutter anschliessend abgezogen und auf die Umfangsfläche der Prägewalze aufgebracht wird, dadurch gekennzeichnet, dass die Narbungsvorlage ein natürliches Leder ist, als Kunstharz ein Siliconkautschuk verwendet wird und dass mit der Prägemutter unter Hitze und Druck die Oberfläche einer thermoplastischen Folie geprägt wird, die nach dem Prägen mit ihren gegenüberliegenden Rändern gegeneinander stossend zu einem Schlauch geformt wird, dass die die Prägung aufweisende Oberfläche der thermoplastischen Folie im Bereich der gegeneinander stossenden Ränder unter Hitze und Druck mit der Prägemutter noch einmal überprägt und so eine endlose Positivform erzeugt wird, auf die eine weitere Schicht Siliconkautschuk aufgegossen oder aufgestrichen wird, die zu einer Prägetochter vulkanisiert wird, die von der Positivform abgezogen und mit der negativen Prägeoberfläche nach aussen auf die Umfangsfläche der Prägewalze aufgeklebt wird.

2. Verfahren nach Anspruch 1, dadurch gekennzeichnet, dass das Prägen der thermoplastischen Folie mit der Prägemutter in einer Flachpresse erfolgt.

3. Verfahren nach Anspruch 1, dadurch gekennzeichnet, dass das Überprägen der thermoplastischen Folie mit der Prägemutter in einer schmalen, im wesentlichen ebenen Flachpresse erfolgt.

4. Verfahren nach Anspruch 3, dadurch gekennzeichnet, dass sich der Prägespalt in Umfangsrichtung des Schlauches zu den Rändern der Pressplatten hin kontinuierlich erweitert.

5. Verfahren nach Anspruch 1, dadurch gekennzeichnet, dass der Schlauch mit der Positivform nach aussen auf eine Walze aufgebracht, dass die Walze ständig gedreht und dabei mittels einer Rakel die Schicht von Siliconkautschuk aufgestrichen und anschliessend zu der Prägetochter vulkanisiert wird.

6. Verfahren nach Anspruch 3, dadurch gekennzeichnet, dass die Ränder der Presseplatten in Achsrichtung des Schlauches schlangenförmig gekrümmt, vorzugsweise unregelmässig gekrümmt sind.

**Claims**

1. A method of production of a dieroll for continuous impression of the surface of a thermoplastic foil, where the die area represents a negative mould of a grain which is to be impressed, in which a synthetic resin is poured or painted onto the surface of a grain pattern in a uniformly thick layer and then is hardened or cross-linked into a mother die, and the mother die is then pulled off and fitted to the circumferential area of the dieroll, characterized in that the grain pattern is a natural leather and a silicone rubber is employed as the synthetic resin and that under heat and pressure from the mother die the surface of a thermoplastic foil is impressed, which after being impressed is formed into a tube by its opposite edges meeting one another in a seam, that in the region of the edges meeting one another in a seam the surface of the thermoplastic foil exhibiting the impression is once again overstamped under heat and pressure from the mother die and thus an endless positive mould is generated onto which is poured or painted a further layer of silicone rubber which is vulcanized into a daughter die which is pulled off the positive mould and with the negative die surface outwards is glued onto the circumferential area of the dieroll.

2. A method as in Claim 1, characterized in that the stamping of the thermoplastic foil by the mother die is effected in a flatbed press.

3. A method as in Claim 1, characterized in that the overstamping of the thermoplastic foil by the mother die is effected in a narrow essentially plane flatbed press.

4. A method as in Claim 3, characterized in that the gap in the stamping in the direction circumferential to the tube widens continuously towards the edges of the press platten.

5. A method as in Claim 1, characterized in that the tube with the positive mould outwards is fitted to a roll, that the roll is turned steadily and in doing so the layer of silicone rubber is painted on by means of a wiper and is subsequently vulcanized into the daughter die.

6. A method as in Claim 3, characterized in that the edges of the press platten are curved in the direction axial to the tube in a wavy shape, preferably in an irregular manner.

**Revendications**

1. Procédé de fabrication d'un rouleau de gaufrage pour le gaufrage continu de la surface d'une feuille thermoplastique, la surface de gaufrage présentant la forme négative d'un grenelage à gaufrer, dans lequel une résine synthétique est coulée ou étendue en couche d'épaisseur constante sur la surface d'un dessin-modèle de grenelage et est ensuite durcie ou réticulée pour former une mère de gaufrage, la mère de gaufrage est ensuite tirée et amenée sur la surface périphérique du rouleau de gaufrage, caractérisé en ce que le dessin-modèle est un cuir naturel, on utilise comme résine synthétique un caoutchouc siliconé, et que la surface d'une feuille thermoplastique est gaufrée par la mère de gaufrage sous application de chaleur et pression, qui est formée après gaufrage sous forme d'un tuyau avec les deux bords opposés aboutés l'un contre l'autre, que la surface de la feuille thermoplastique présentant le gaufrage est surgaufrée encore une fois sous application de chaleur et pression dans la région des bords aboutés l'un contre l'autre de manière à former une forme positive sans fin sur laquelle est coulée ou étendue une autre couche de caoutchouc siliconé qui est vulcanisée pour former un duplicateur de gaufrage qui est tiré de la forme positive et est collé sur la surface périphérique du rouleau de gaufrage avec la surface de gaufrage négative vers l'extérieur.

2. Procédé selon la revendication 1, caractérisé en ce que le gaufrage de la feuille thermoplastique avec la mère de gaufrage est effectué dans une presse à plat.

3. Procédé selon la revendication 1, caractérisé en ce que le surgaufrage de la feuille thermoplastique avec la mère de gaufrage est effectué dans une presse à plat étroite sensiblement plane.

4. Procédé selon la revendication 3, caractérisé en ce que l'interstice de gaufrage s'élargit continuellement en direction périphérique du tuyau vers les bords des plateaux de presse.

5. Procédé selon la revendication 1, caractérisé en ce que le tuyau est amené avec la forme positive depuis l'extérieur sur un rouleau, que le rouleau est entraîné en rotation en permanence et la couche de caoutchouc siliconé est en même temps appliquée au moyen d'une râclette et est ensuite vulcanisée pour former le duplicateur de gaufrage.

6. Procédé selon la revendication 3, caractérisé en ce que les bords des plateaux de presse sont courbés en forme sinueuse en direction axiale du tuyau, avantageusement sont courbés irrégulièrement.